# EUROPEAN PATENT APPLICATION

(11) **EP 3 557 496 A1**
(43) Date of publication of application: **23.10.2019**
(21) Application number: 18168043.0
(22) Date of filing: 18.04.2018
(51) Int. Cl.: G06Q 10/00

(54) **MULTIPLE LAYER SMART-CONTRACT**

(71) Applicant: Chain IP Holdings, Inc., 850 Panama City (PA)
(72) Inventor: DE FILIPPI, Giotto, 850 Panama City (PA)
(74) Representative: Kraus & Weisert Patentanwälte PartGmbB

(57) **Abstract**

The present invention relates to a smart contract (3000) for a network (1000) implementing a distributed ledger, the smart contract (3000) comprising: a first program (3001), which can be executed on the network (1000) as a smart contract, a second program (3002), which can be executed on the network (1000) as a smart contract, wherein the first program (3001) can modify at least parts of the second program (3002). The invention further relates to a method for executing the smart contract.

## Description

The present invention generally relates to a smart contract for a network implementing a distributed ledger which allows a simplified testing of the smart contract and a more reliable operation thereof. The invention further relates to a method for running the smart contract on the network.

### Prior art

Distributed ledgers are becoming a more common technology for certifying and tracking several kinds of assets, such as cryptocurrencies, contracts, but also documents such as certifications, medical records, identify documents, etc. The distributed ledgers also provide means for recording transactions related to the assets or documents. Namely modification to the asset or documents, be it a modification to its content or to its owner, can be recorded by the distributed ledger.

Several kinds of distributed ledgers are available, based on different technologies, such as blockchain, Hashgraph, etc. In general they all share the common concept that the network implementing the distributed ledger comprises a plurality of transaction nodes and a plurality of ledger computation nodes. The transaction among the transaction nodes are recorded by the ledger computation nodes with a computationally intensive approach, which provides the security of the distributed ledgers with respect to brute force hacker attacks.

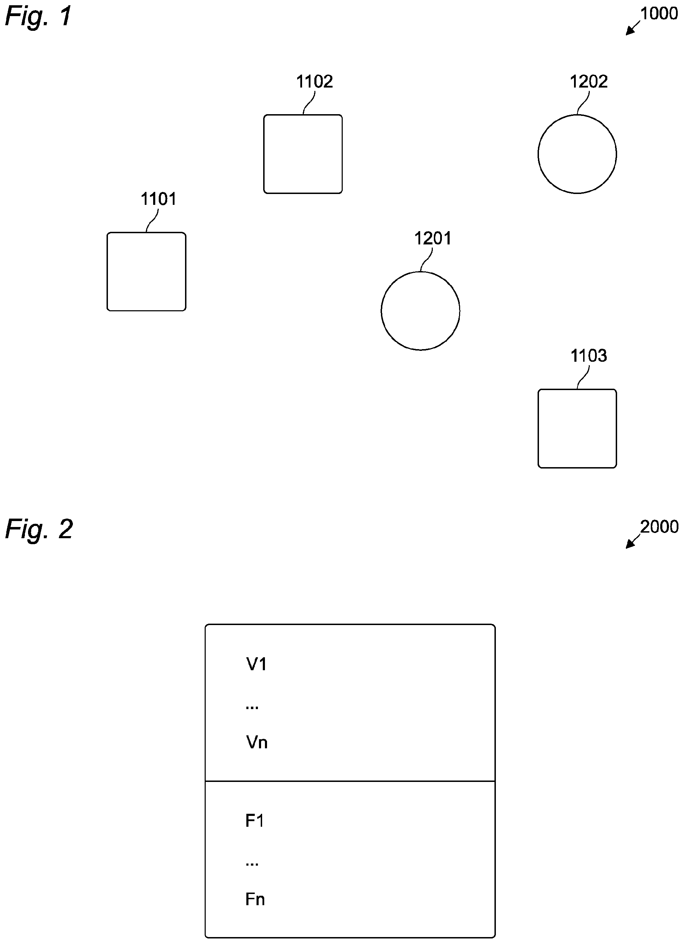

Figure 1 schematically illustrates a network 1000 implementing a distributed ledger in accordance with the state of the art, comprising a plurality of transaction nodes 1103-1103 and a plurality of ledger computing nodes 1201-1202. The distributed ledger could be, for instance, Ethereum. In this case the ledger computing nodes 1201-1202 are configured to run one or more smart contracts for allowing any of the transaction nodes1101-1103 to perform several kinds of transactions which are then recorded in the distributed ledger, in the case of Ethereum implemented with a blockchain implementation.

In general, in distributed ledgers such as the one illustrated in figure 1, any transaction node 1101-1103 can perform transactions with any other transaction node 1101-1103. The transactions are performed by making use of one of the functions of the smart contract running on the network 1000.

Figure 2 schematically illustrates a smart contract, in the form of a single program 2000, in accordance with the state of the art. The program 2000 is a self-contained software, meaning that it can operate without referring to variables or functions outside of the program 2000. The program 2000 comprises one or more variables V1-Vn and one or more functions F1-Fn. The functions F1-Fn operate on the variables V1-Vn and can change their values. The program is regularly saved in the distributed ledger so that interactions among the transaction nodes 1101-1103 are performed by the program 2000 and reliably stored in the distributed ledger.

Once released on the network 1000, the functioning of the smart contract cannot be changed any more. This ensures to the users, namely the transaction nodes 1101-1103 that the smart contract cannot be changed without their agreement, and thus increases the confidence in using the smart contract as a repository for valuable information and/or documents.

This however also implies that the smart contract requires a thorough check for bugs before being released on the network 1000. A formal verification of the software included in the smart contract can be a very computational intensive approach, if at all possible, even for very short smart contracts. Moreover, the use of a formal verification often forces limitations on how the smart contract must be coded. This often translates into less efficient coding which is generally not desirable and particularly so in the technical field of smart contracts, where the transaction nodes 1103-1103 have to bear the costs for the operation of the ledger computing nodes 1201-1202, thus making an efficient use of the resources of the ledger computing nodes 1201-1202 highly important for the successful adoption of the smart contract.

Those issues limit the use of formal verification in the field of smart contracts. This results in smart contracts being released on network 1000 which may contain bugs that have not been identified. If that happens, there is a risk that those bugs may result in the smart contract failing to function and, in worst cases, making it impossible to solve the issue, thus leaving the software, and all its information saved in forms of variable blocked. As mentioned above, those variables may identify valuable information in the real world, such as property rights. Such bugs can therefore result in complex legal situations involving several parties.

Such kinds of issues make it very important that smart contracts are checked thoroughly prior to their release. As already mentioned, this is however now always computationally possible.

The present invention has been developed in view of the above problems and it is an object thereof to provide a more reliable form of smart contracts which improves on at least some of the drawbacks of the prior art.

### Summary of the invention

The present invention generally relies on the principle that smart contracts can, contrary to what has been done until now on all available smart contracts, be implemented by more than one program and in particular by two or more programs, each running on the network 1000 as a single program but both belonging to the same smart contract. In this manner it is possible to provide several layers of coding, possibly nested into each other, so that a bug in one program does not necessarily result in both programs being blocked.

Thanks to this approach, even is one of the two or more programs comprises a bug which results in the malfunctioning of the one program, the remaining program may contain instructions which allows this malfunctioning to be overcome.

In other words, by nesting the second program into the first program and giving priority to the first program, the first program can be used to override the operation of the second program. This is particularly advantageous in those cases in which the second program can run into a bug or show an unexpected behavior. As the technology behind distributed ledgers does not allow the modification of the code of the second program to correct those unwanted behaviors, the present invention advantageously solves this problem by giving another program, namely the first program, the opportunity to take precedence over the operation of the second program and override some of its values.

An embodiment of the invention can relate to a smart contract for a network implementing a distributed ledger, the smart contract comprising: a first program, which can be executed on the network as a smart contract, a second program, which can be executed on the network as a smart contract, wherein the first program can modify at least parts of the second program.

Thanks to this approach, the first program can override the second program. In particular, the modification of the second program by the first program can relate to the modification of the value of variables, in the second program, by the first program. In general, the first program's action will have precedence over those of the second program.

In some embodiments the second program can comprise one or more second variables and one or more second functions, the first program can comprise one or more first functions which can modify at least some of the one or more second variables.

In this manner, the overriding of the second program by the first program can be achieved by using the one or more first the functions of the first program to modify the value of the at least one or more second variables of the second program.

In some embodiments the first program can comprise one or more first variables, the second program can comprise one or more second variables, at least one of the first variables can be the same as at least one of the second variables.

Thanks to this approach it is advantageously possible to override the value of the same variable in the first and second program by simply changing the value of the variable in the first program. Since the variable is the same in the first and second program, the value set by the first program can then be automatically transferred to the second program.

In some embodiments the first program can comprises one or more first variables and one or more first functions, the second program can comprise or more second functions, at least one of the second functions can comprise instructions for reading one or more of the first variables, and/or at least one of the second functions can comprise instructions for executing one or more of the first functions.

Thanks to this approach, the operation of the second program can be influenced by the values or the functions belonging to the first program. In this manner, the first program takes precedence over the second program since the first program can internally change the value of its variables and this will be automatically reflected on the operation of the second program.

An embodiment of the invention can relate to a method for executing a smart contract in a network implementing a distributed ledger, wherein the smart contract is a smart contract according to any of the previous embodiments, wherein the distributed ledger is saved on a blockchain, the method comprising the steps of: saving the distributed ledger, executing the first program and/or executing the second program, saving the distributed ledger, wherein the method further comprises a step of reconciling the first program and the second program.

Thanks to this approach, it is advantageously possible to have both programs running in the distributed ledger while giving priority to the first program thanks to the reconciling step.

In some embodiments the step of reconciling can comprise the steps of: reading one or more values of one or more second variables of the second program, reading one or more values of one or more first variables of the first program, evaluating if the value of the second variable does not correspond to the value of the corresponding first variable, in case of lack of correspondence, substituting the value of the second variable with the value of the corresponding first variable.

In this manner, it is advantageously possible to override the values of the second program by means of the first program.

In some embodiments the step of reconciling can be carried out after the step of executing the first program and/or after the step of executing the second program, and before the step of saving the distributed ledger.

Thanks to this approach, it can be guaranteed that in the case of an override of the second program by means of the first program, the values recorded in the distributed ledger will be correct, in particular they will correspond to the values resulting from the override and not from the unwanted operation of the second program.

In some embodiments step of reconciling can be carried out after the step of saving the distributed ledger and before the step of executing the first program and/or before the step of executing the second program.

Thanks to this approach, even if the values stored in the last block of the distributed ledger by the second programs are resulting from an unwanted operation, those values will be corrected by the overriding operation of the first program through the reconciling step, such that the further actions on the distributed ledger will be based on the corrected values and not on the erroneous values.

An embodiment of the invention can relate to a smart contract for a network implementing a distributed ledger, the smart contract comprising: a first program, which can be executed on the network as a smart contract, a second program, which can be executed on the network as a smart contract, wherein in case of conflicts among the first program and the second program, the first program has precedence over the second program.

Thanks to this implementation it is advantageously possible to replace one or more of the functionalities of the second program by the first program.

### Short description of the figures

Figure 1 schematically illustrates a network 1000 implementing a distributed ledger in accordance with the state of the art;
Figure 2 schematically illustrates a smart contract 2000, in the form of a single program, in accordance with the state of the art;
Figure 3 schematically illustrates a smart contract 3000, in the form of two programs 3001 and 3002, in accordance with an embodiment of the invention;
Figure 4 schematically illustrates a method 4000 for executing a smart program 3000 in accordance with an embodiment of the invention;
Figure 5 schematically illustrates an implementation of a reconciling step S5500 in accordance with an embodiment of the invention.

### Detailed description of preferred embodiments

Although the invention can find application with different kind of distributed ledgers, in the following description embodiments will be explained, for ease of understanding through examples, with reference to specific embodiments relating to an implementation using a blockchain as distributed ledger. It will however be understood that the invention is not limited to this specific implementation.

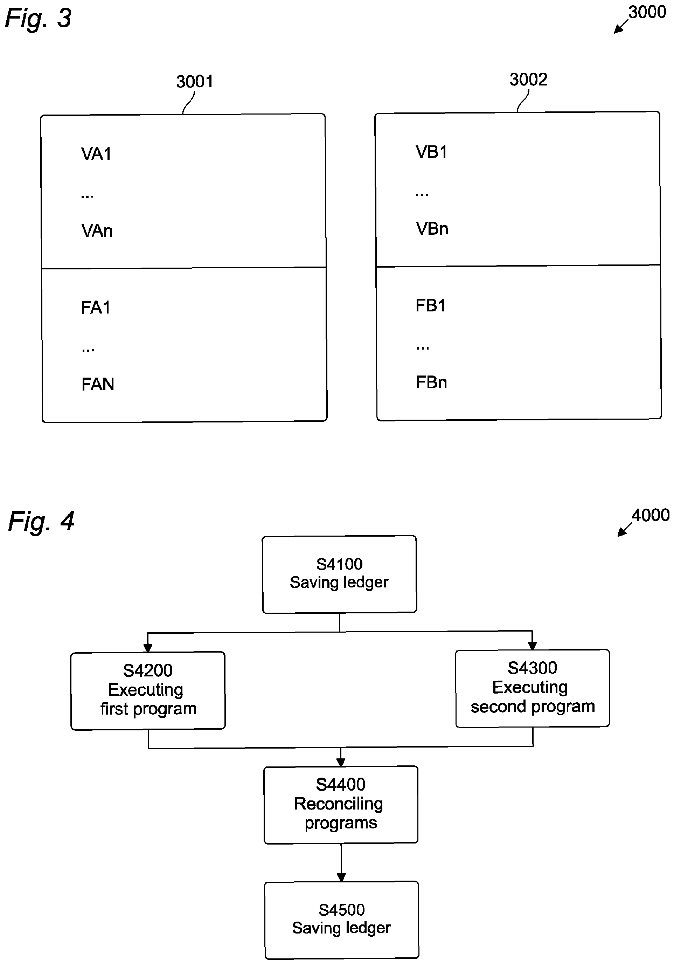

Figure 3 schematically illustrates a smart contract 3000, in the form of two programs 3001 and 3002, in accordance with an embodiment of the invention. It will be clear that the number of programs included in the smart contract 3000 is at least two but is not limited thereto, any number of program equal to or higher than two may be included in the smart contract 3000.

In some embodiments, each program 3001, 3002 may contain a unique code or address for identifying the smart program 3000 to which the program 3001, 3002 belong, thus allowing several smart contracts 3000, each with several programs 3001, 3002, to run on a single network 1000 without collisions. The code or address can be saved in a variable of the program, which preferably cannot be modified by the program. Thanks to this approach the network can recognize that two or more programs 3001, 3002 belong to the same smart contract. Alternatively, or in addition, the code or address can be different for the different programs and the network 1000 can associate the different codes or addresses belonging to the same smart contract, for instance by a function of the network 1000. Still alternatively, or in addition, a main program can be defined as the smart contract and the main program can comprise the codes or addresses of all the remaining programs belonging to the smart contract.

The smart contract 3000 can thus be run on a network 1000 implementing a distributed ledger, and comprises a first program 3001, which can be executed on the network 1000 as a smart contract, and a second program 3002, which can be executed on the network 1000 as a smart contract. Here, the capability of being executed as a smart contract on the network 1000 implies at least that the program fulfills all formal requirements of the network 1000 for being run as a smart contract, and that the program can be reliably stored in the distributed ledger.

As a distinguishing feature over the prior art, the first program 3001 can modify, or override, at least parts, functions or variables of the second program 3002. That is, while in the prior art each program 2000 runs independently on network 1000, in the invention there can be interaction at least in one direction, among programs 3001 and 3002. This allows first program 3001 to take precedence over second program 3002, as first program 3001 can modify the second program 3002. This, in turn, allows the first program 3001 to act in case of bugs present in the second program 3002, thus making the verification of second program 3002 simpler or less needed. It will further be clear that this provides additional advantages in terms of resistance to hacking and ownership of the smart contract 3000. For instance, if the second program 3002 is hacked, the first program 3001 could be used to restore the second program 3002 to the status prior to the hacking attacks. Additionally, or as an alternative, the ownership of the first program 3001 and of the second program 3002 may be different, thus allowing different privileges to different kinds of transaction nodes 1101-1103, depending on which program 3301, 3302 they are owner of.

Generally, each of the programs 3001, 3002 comprises respective variables VA1-Van, VB1-VBn and functions FA1-Fan, FB1-FBn, operating on the variables within the single program 3001, 3002, similarly to the operation of program 2000. However, the functions and variables of the two programs 3001, 3002 can also interact with each other, advantageously allowing first program 3001 to have an effect on second program 3002.

Several possible specific implementations for this functionality will be discussed in the following.

As illustrated in figure 3, in some embodiments, the second program 3002 can comprise one or more second variables VB1-VBn and one or more second functions FB1-FBn, while the first program 3001 can comprise one or more first functions FA1-FAn which can modify at least some of the one or more second variables VB1-VBn. In this manner, the modification of the second program 3002 by means of the first program 3001 can be operated by executing the one or more first functions FA1-FAn which can modify at least some of the one or more second variables VB1-VBn.

The operation of the first functions FA1-FAn on the one or more second variables VB1-VBn can be achieved in several ways which will be clear to those skilled in the art. As an example, the name of the second variables VB1-VBn could be the same in the first program 3001 and in the second program 3002. In some embodiments, the running of the first program 3001 may thus also require the running of the second program 3002, so that the value of the second variables VB1-VBn can be updated. In some embodiments the second program 3002 can comprise a function for updating the second variables VB1-VBn based on the input provided by the first program 3001.

In some embodiments, the first program 3001 can comprise one or more first variables VA1-VAn, and the second program 3002 can comprise one or more second variables VB1-VBn, wherein at least one of the first variables VA1-VAn is the same as at least one of the second variables VB1-VBn. In some embodiments, the same variable in the two programs 3001, 3002 could have the same name.

In some embodiments, the first program 3001 can comprise one or more first variables VA1-VAn and one or more first functions FA1-FAn, the second program 3002 can comprise or more second functions FB1-FBn, and at least one of the second functions FB1-FBn can comprise instructions for reading one or more of the first variables VA1-VAn and/or at least one of the second functions FB1-FBn can comprise instructions for executing one or more of the first functions FA1-FAn. In this manner the first program 3001 can influence the second program 3002 by influencing the operation of the second functions FB1-FBn when they execute the first functions FA1-Fan and/or when they read the first variables VA1-Van. In other words, the action of the first program 3001 on the second program 3002 does not necessarily require the first program 3001 to actively operate on the second program 3002, but can also be obtained by the second program 3002 necessitating an input from the first program 3001 for some of its functions.

In some embodiments, the first program 3001 is less complex than the second program 3002. In particular, in some embodiments, the first program 3001 allows formal verification while the second program 3002 does not allow formal verification. Alternatively, or in addition, in some embodiments, the first program 3001 has a smaller number of variables and/or a smaller number of functions than the second program 3002. Still further alternatively, or in addition, the first program 3001 can only contain a limited set of coding functions than the second program 3002, for instance the first program 3001 can forbid the use coding functions which increase the complexity of a verification of the code, such as cycles, etc. Figure 4 schematically illustrates a method 4000 for executing smart program 3000 in accordance with an embodiment of the invention. In particular, method 4000 can be used for executing smart contract 3000 in a network 1000 implementing a distributed ledger. In some embodiments, the smart contract can be a smart contract 3000 according to any of the previously described embodiments or to any combination thereof. In some embodiments, the distributed ledger is saved on a blockchain in a known manner, thus resulting in a sequence of so called blocks.

In particular, the method 4000 comprises the steps of saving S41 00 the distributed ledger, for instance by saving a first block in a blockchain, thus representing the last valid state of the blockchain, that is, the last valid state of the distributed ledger. The computation and saving of the blocks can be implemented in several manners which are known to those skilled in the art of distributed ledgers technology.

The method 4000 further comprises steps S4200 and S4300 of executing, respectively, the first program 3001 and/or the second program 3002. It will be clear that those steps do not need to necessarily be carried out at the same time. Generally, for the purpose of the explanation of one possible case of use of method 4000, it will be sufficient that the first program 3001 and/or the second program 3002 is executed between the computation of two blocks.

In some embodiments, the execution of the second program 3002 can always require the parallel or immediately subsequent execution of the first program 3001. Thanks to this implementation it is possible to ensure that any unwanted operation of the second program 3002 is corrected as soon as possible by the first program 3001.

Additionally, the method 4000 further comprises a step S4500 of saving again the distributed ledger, for instance by saving a second block in the blockchain, similarly to step S4100.

In the prior art, in which each smart contract is a single program 2000, the last known state of the program 2000 at the time of step S4500 is saved in the distributed ledger. In the case of the smart contract 3000, however, it is possible that the first program 3001 and the second program 3002 may not be aligned in their content. This may be due, for instance, to a malfunctioning of second program 3002, and/or to an hacking attack and/or to a change of first program 3001 which is intended to reflect on the second program 3002.

This is solved by the method 4000 in that the method 4000 further comprises a step S4400 of reconciling the first program 3001 and the second program 3002. In step S4400, the operation of the first program 3001 takes precedence over that of the second program 3002 so as to remove any discordance which may be present between the programs 3001, 3002.

In some embodiments, the step of reconciling S4400 can be carried out after the step of executing S4200 the first program 3001 and/or after the step of executing S4300 the second program 3002, and before the step of saving S4500 the distributed ledger. In this manner, the distributed ledger never comprises discordances among the programs 3001, 3002, making it advantageously possible to use any of the two programs 3001, 3002 as a basis for a new round of transactions in the network 2000, in particular using the second program 3002 as a basis for a new round of transactions, without prior having to check the second program 3002 against the first program 3001.

In some embodiments, the step of reconciling S4400 can be carried out after the step of saving S4100 the distributed ledger and before the step of executing S4200 the first program 3001 and/or before the step of executing S4300 the second program 3002. Thanks to this approach, the saving of the distributed ledger can be started at a specific time, without having to wait for the outcome of the reconciliation step S4400, the duration of which may be difficult to predict.

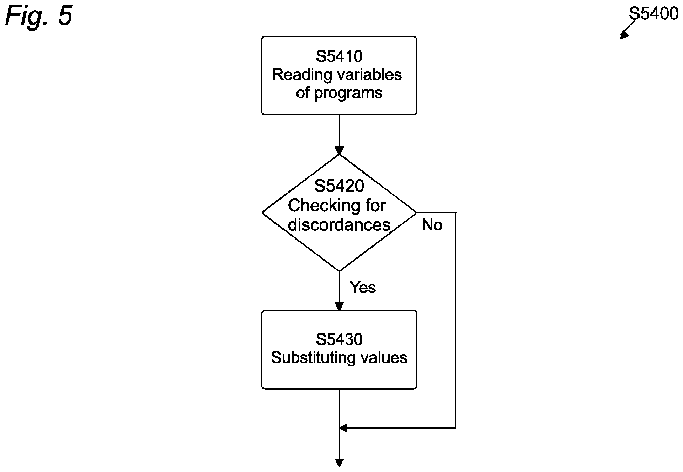

Figure 5 schematically illustrates an implementation of a reconciling step S5500 in accordance with an embodiment of the invention. In particular, reconciling step S5500 is one possible implementation of reconciling step S4500.

More specifically, the step of reconciling S5400 comprises the steps of reading S5410 one or more values of one or more second variables VB1-VBn of the second program 3002, and one or more values of one or more first variables VA1-VAn of the first program 3001. In a further evaluating step S5420, it is checked if the value of the second variable VB1-VBn does not correspond to the value of the corresponding first variable VA1-Van. Here, the corresponding values may be, for instance, the same values in both programs 3001, 3002. in case of lack of correspondence, a substituting step S5430 allows substituting the value of the second variable VB1-VBn with the value of the corresponding first variable VA1-VAn. In other words, if a given variable is present both in the first program 3001 and in the second program 3002 but has a first value in the first program 3001 and a second value in the second program 3002, the value of the first program 3001 is copied into the second program 3002.

In this manner it is possible to correct any misalignment between the first program 3001 and the second program 3002, which may be due to any malfunctioning of the second program 3002. This allows the second program 3002 to include coding which may not be completely formally controlled but still operate in a reliable manner.

A further embodiment of the invention relates to a smart contract for a network implementing a distributed ledger, the smart contract comprising: a first program, which can be executed on the network as a smart contract, a second program, which can be executed on the network as a smart contract, wherein in case of conflicts among the first program and the second program, the first program has precedence over the second program.

That is, generally, the first program 3001 can control the output of the one or more second functions VB1-VBn and/or the value of the one or more second variables VB1-VBn directly, thus overriding the operation of the second program 3002. In other words, in case of conflicts among the values of the second program to be stored in the distributed ledger, that is the values of the second variables VB1-VBn, if conflicting instructions are received by the second program 3002 and by the first program 3001, the instructions of the first program 3001 will dictate what values are stored in the distributed ledger and the instructions of the second program 3002 will be discarded.

Although several embodiments have been described above, it will be clear to those skilled in the art that one or more features of any embodiment can be combined with one or more features of any embodiment so as to result in new embodiments of the invention, which is defined not by the described embodiments but rather by the claims.

### List of reference numerals

### Figure 1

1000: network
1101-1103: transaction node
1201-1202: ledger computing node

### Figure 2

2000: program
V1-Vn: variables
F1-Fn: functions

### Figure 3

3000: smart contract
3001: program
3002: program
VA1-VAn: variables
FA1-FAn: functions
VB1-VBn: variables
FB1-FBn: functions

### Figure 4

S4100: saving block
S4200: executing first program
S4300: executing second program
S4400: reconciling programs
S4500: saving block

### Figure 5

S5410: reading
S5420: evaluating
S5430: substituting

## Claims

1. A smart contract (3000) for a network (1000) implementing a distributed ledger, the smart contract (3000) comprising:
a first program (3001), which can be executed on the network (1000) as a smart contract,
a second program (3002), which can be executed on the network (1000) as a smart contract,
**characterized in that**
the first program (3001) can modify at least parts of the second program (3002).

2. The smart contract (3000) according to claim 1, wherein
the second program (3002) comprises one or more second variables (VB1-VBn) and one or more second functions (FB1-FBn),
the first program (3001) comprises one or more first functions (FA1-FAn) which can modify at least some of the one or more second variables (VB1-VBn).

3. The smart contract (3000) according to claim 1, wherein
the first program (3001) comprises one or more first variables (VA1-VAn),
the second program (3002) comprises one or more second variables (VB1-VBn),
at least one of the first variables (VA1-VAn) is the same as at least one of the second variables (VB1-VBn).

4. The smart contract (3000) according to claim 1, wherein
the first program (3001) comprises one or more first variables (VA1-VAn) and one or more first functions (FA1-FAn),
the second program (3002) comprises or more second functions (FB1-FBn),
at least one of the second functions (FB1-FBn) comprises instructions for reading one or more of the first variables (VA1-VAn), and/or
at least one of the second functions (FB1-FBn) comprises instructions for executing one or more of the first functions (FA1-FAn).

5. A method (4000) for executing a smart contract (3000) in a network (1000) implementing a distributed ledger,
wherein the smart contract (3000) is a smart contract according to claim 1,
wherein the distributed ledger is saved on a blockchain,
the method (4000) comprising the steps of:
saving (S4100) the distributed ledger,
executing (S4200) the first program (3001) and/or executing (S4300) the second program (3002),
saving (S4500) the distributed ledger,
and **characterized in that**
the method further comprises a step of
reconciling (S4400, S5400) the first program (3001) and the second program (3002).

6. The method (4000) according to claim 5, wherein the step of reconciling (S5400) comprises the steps of:
reading (S5410) one or more values of one or more second variables (VB1-VBn) of the second program (3002),
reading (S5410) one or more values of one or more first variables (VA1-VAn) of the first program (3001),
evaluating (S5420) if the value of the second variable (VB1-VBn) does not correspond to the value of the corresponding first variable (VA1-VAn),
in case of lack of correspondence, substituting (S5430) the value of the second variable (VB1-VBn) with the value of the corresponding first variable (VA1-VAn).

7. The method (4000) according to claim 5 or 6, wherein the step of reconciling (S4400. S5400) is carried out after the step of executing (S4200) the first program (3001) and/or after the step of executing (S4300) the second program (3002), and before the step of saving (S4500) the distributed ledger.

8. The method (4000) according to claim 5 or 6, wherein the step of reconciling (S4400. S5400) is carried out after the step of saving (S4100) the distributed ledger and before the step of executing (S4200) the first program (3001) and/or before the step of executing (S4300) the second program (3002).

9. A smart contract (3000) for a network (1000) implementing a distributed ledger, the smart contract (3000) comprising:
a first program (3001), which can be executed on the network (1000) as a smart contract,
a second program (3002), which can be executed on the network (1000) as a smart contract,
**characterized in that**
in case of conflicts among the first program (3001) and the second program (3002), the first program (3001) has precedence over the second program (3002).
